# EUROPÄISCHE PATENTSCHRIFT

(11) **EP 1 501 355 B1**
(45) Veröffentlichungstag und Bekanntmachung des Hinweises auf die Patenterteilung: **19.05.2010**
(21) Anmeldenummer: 03747121.6
(22) Anmeldetag: 24.04.2003
(51) Int. Cl.: A01N 25/30, A01N 31/02

(54) **VERWENDUNG BESTIMMTER ALKOHOLALKOXYLATE ALS ADJUVANS FÜR DEN AGROTECHNISCHEN BEREICH**
USE OF DEFINED ALCOHOL ALKOXYLATES AS ADJUVANTS IN THE AGROTECHNICAL FIELD
UTILISATION D'ALCOXYLATES DEFINIS EN TANT QU'ADJUVANTS DANS LE DOMAINE DE LA TECHNIQUE AGRICOLE

(30) Priorität: 24.04.2002 DE 10218316
(43) Veröffentlichungstag der Anmeldung: 02.02.2005
(60) Teilanmeldung: 09181019.2
(73) Patentinhaber: BASF SE, 67056 Ludwigshafen (DE)
(72) Erfinder: BERGHAUS, Rainer, 67346 Speyer (DE); SCHMIDT, Oskar, 67105 Schifferstadt (DE); KÖHLE, Harald, 67273 Bobenheim (DE); STIERL, Reinhard, 67251 Freinsheim (DE); WAGNER, Norbert, 67112 Mutterstadt (DE); KLINGELHÖFER, Paul, 68165 Mannheim (DE)
(86) Internationale Anmeldenummer: PCT/EP2003/004276
(87) Internationale Veröffentlichungsnummer: WO 2003/090531

(56) Entgegenhaltungen:
- EP-A- 0 473 003
- WO-A-01/30147
- WO-A-01/77276
- WO-A-95/18531
- WO-A-96/31121
- WO-A-97/00010
- WO-A-99/03345
- US-A- 5 661 121
- US-A- 6 057 284
- US-A- 6 124 301

## Beschreibung

Die vorliegende Erfindung betrifft die Verwendung bestimmter Alkoholalkoxylate vom amphiphilen Typ als wirkungsverbesserndes Adjuvans im agrotechnischen Bereich und insbesondere im Bereich des Pflanzenschutzes sowie Mittel zur Pflanzenbehandlung, welche die Alkoholalkoxylate enthalten.

Neben der Optimierung der Wirkstoffeigenschaften kommt mit Blick auf eine industrielle Produktion und Anwendung von Wirkstoffen der Entwicklung eines effizienten Mittels besondere Bedeutung zu. Durch eine sachgerechte Formulierung des oder der Wirkstoffe muß ein optimaler Ausgleich zwischen teils gegenläufigen Eigenschaften wie der biologischen Wirksamkeit, der Toxikologie, möglichen Einflüssen auf die Umwelt und den Kosten gefunden werden. Darüber hinaus bestimmt die Formulierung zu einem erheblichen Maß die Haltbarkeit und den Anwendungskomfort eines Mittels.

Von besonderer Bedeutung für die Wirksamkeit eines agrotechnischen Mittels ist die effektive Aufnahme des Wirkstoffs durch die Pflanze. Erfolgt diese Aufnahme über das Blatt, so stellt sich diese als komplexer Transportvorgang dar, bei dem die wirkstoffmasse, beispielsweise ein Herbizid, zunächst in die wachsartige Cuticula des Blatts eindringen und anschließend über die Cuticula in die unterliegenden Gewebe an den eigentlichen Wirkort diffundieren muss.

Allgemein bekannt und landwirtschaftliche Praxis ist es, zwecks verbesserter Wirksamkeit Formulierungen bestimmte Hilfsstoffe zuzusetzen. Vorteilhafterweise können dadurch die Wirkstoffmengen in der Formulierung bei gleichbleibender Aktivität verringert werden, wodurch Kosten minimiert und gegebenenfalls bestehende gesetzliche Regelungen eingehalten werden können. Auch gelingt es in Einzelfällen, das Wirkstoffspektrum zu vergrößern, indem Pflanzen, die ohne Zusatz nur in unzureichender Weise mit einem bestimmten Wirkstoff behandelt werden konnten, durch Zusatz bestimmter Hilfsstoffe einer entsprechenden Behandlung zugänglich sind. Weiterhin kann die Leistungsfähigkeit unter ungünstigen Umweltbedingungen in Einzelfällen durch eine geeignete Formulierung erhöht werden. Mithin können auch Unverträglichkeiten verschiedener Wirkstoffe in einer Formulierung vermieden werden.

Derartige Hilfsstoffe werden gelegentlich auch als Adjuvantien bezeichnet. Es handelt sich oftmals um oberflächenaktive oder salzartige Verbindungen. Je nach Wirkunqsweise können z.B. Modifikatoren, Aktuatoren, Dünger und pH-Puffer unterschieden werden. Modifikatoren beeinflussen Benetzung, Haftung und Spreitung einer Formulierung. Aktuatoren brechen die wachsartige Pflanzencuticula auf und verbessern die Penetration des wirkstoffs in die Cuticula sowohl kurzfristig (im Minutenbereich) als auch langfristig (im Stundenbereich). Dünger wie Ammoniumsulfat, Ammoniumnitrat oder Harnstoff verbessern die Absorption und Löslichkeit des Wirkstoffs, und sie können antagonistische Verhaltensweisen von Wirkstoffen verringern. pH-Puffer werden herkömmlicherweise zur optimalen Einstellung des pH-Werts der Formulierung verwendet.

Im Hinblick auf die Aufnahme des Wirkstoffs in das Blatt können oberflächenaktive Substanzen als Modifikatoren und Aktuatoren wirken. Allgemein wird angenommen, dass geeignete oberflächenaktive Substanzen die effektive Kontaktfläche von Flüssigkeiten auf Blättern durch eine Verminderung der Oberflächenspannung erhöhen können. Darüber hinaus können bestimmte oberflächenaktive Substanzen die epicuticulären Wachse auflösen oder aufbrechen, was die Absorption des Wirkstoffs erleichtert. Ferner können einige oberflächenaktive Substanzen auch die Löslichkeit von Wirkstoffen in Formulierungen verbessern und damit eine Kristallbildung vermeiden oder diese zumindest hinauszögern. Schließlich können sie in bestimmten Fällen auch die Absorption von Wirkstoffen beeinflussen, indem sie Feuchtigkeit zurückhalten.

Adjuvantien vom oberflächenaktiven Typ werden in vielfältiger Weise für agrotechnische Anwendungen genutzt. Man kann diese in anionische, kationische, nicht-ionische oder amphotere Stoffgruppen unterteilten.

Traditionell werden Öle auf Petroleum-Basis als aktivierende Adjuvantien verwendet. In jüngster Vergangenheit setzte man auch Samenextrakte, natürliche Öle und deren Derivate, beispielsweise aus Sojabohnen, Sonnenblumen und Kokosnuss, ein.

Bei synthetischen oberflächenaktiven Substanzen, die üblicherweise als Aktuatoren verwendet werden, handelt es sich unter anderem um Polyoxyethylen-Kondensate mit Alkoholen, Alkylphenolen oder Alkylaminen, welche HLB-Werte im Bereich von 8 bis 13 aufweisen. In diesem Sinne nennt die WO 00/42847 beispielsweise den Einsatz bestimmter linearer Alkoholalkoxylate, um die Wirksamkeit agrotechnischer Biozidformulierungen zu steigern. In der EP-A 0 356 812 sind Adjuvantien beschrieben, die neben einem anionischen Tensid auch ein nichtionisches Tensid enthalten sollen. Als nichtionische Tenside werden polyalkoxylierte C₆-C₂₂-Alkylether in Betracht gezogen.

Das Spektrum von Alkoholalkoxylaten ist jedoch vielfältig. Als Tenside finden sie vornehmlich Anwendung in Wasch- und Reinigungsmitteln, in der metallverarbeitenden Industrie, bei der Herstellung und Verarbeitung von Textilien, in der Leder-, Papier-, Druck-, Galvano- und Fotoindustrie, bei der Wasserbehandlung, in pharmazeutischen, tierarzneilichen und den Pflanzenschutz betreffenden Formulierungen, oder in der Kunststoff herstellenden und Kunststoff verarbeitenden Industrie. Insbesondere die Strukturen des Alkoholteils und in bestimmten Fällen auch des Alkoxylatteils nehmen Einfluss auf die Eigenschaften der Alkoxylate, so dass bei den vorstehend genannten Anwendungen verschiedene technische Effekte zum Tragen kommen können. Hierzu gehören das Benetzen, das Spreiten, die Penetration, das Anhaften, die Filmbildung, das Verbessern von Verträglichkeiten, die Driftkontrolle und das Entschäumen.

Die in WO 99/03345 zur Verbesserung der Wirkung eines Pflanzenschutzmittels vorgeschlagenen Tenside weisen folgende Struktur auf:

R-O[(EO)ₓ(PO)_{y}](EO)_{z}-H.

Es handelt sich also um EO/PO-Blockalkoxylate linearer und verzweigter Alkohole mit 6 bis 30 Kohlenstoffatomen im Alkoholteil (vgl. Anspruch 1 auf Seite 35 der WO 99/03345). Der Alkoholteil der konkret angegebenen Alkoholalkoxylate ist linear.

Die in WO 01/30147 beschriebenen Zusammensetzungen enthalten zwei unterschiedliche, nichtionische oberflächenaktive Agenzien mit jeweils einem hydrophoben Teil, der auf einem C13-Oxoalkohol oder einem "Alcool isodécylique-αisodécyl-ω-hydroxy" beruhen kann.

Den WP-Formulierungen gemäß WO 95/18531 sollen nichtionische Tenside der Formel R₁-(O-R₂-)ₙO-R₃ zugesetzt werden, wobei R₁ unter anderem C₈-C₁₆-Alkyl ist. Angegeben werden Ethoxylate von Alkoholen, deren Alkoholteil vorzugsweise linear ist. Dementsprechend werden als Beispiele für jene Alkylreste lediglich lineare Reste wie Octyl, Nonyl, etc. genannt.

Die in US 6,124,301 vorgeschlagenen alkoxylierten Fettalkohole weisen 9 bis 24 Kohlenstoffatome im Alkoholteil auf und können linear oder verzweigt sein. Allerdings sind längerkettige Alkohole mit 14 bis 20 Kohlenstoffatomen bevorzugt. Es ist festzustellen, dass sämtliche der in US 6,124,301 genannten Alkoholalkoxylate, die unter dem Handelsnamen Plurafac® vertrieben werden, auf einem linearen Alkoholteil beruhen. Lediglich das unter dem Handelsnamen Atplus MBA 1303 vertriebene Alkoholalkoxylat scheint auf einem verzweigten Alkohol zu beruhen. Hierbei handelt es sich aber um einen C₁₂-C₁₅-Alkohol.

Die WO 96/31121 beschreibt herbizide Zusammensetzungen, die u.a. Isotridecylethoxylate als Adjuvans enthalten können.

Die in EP 0 473 003 beschriebenen Feststoff Formulierungen können ein Isotridecylethoxylat mit durchschnittlich 6 Ethylenoxid-Einheiten enthalten.

WO 97/00010 beschreibt den Zusatz von ethoxylierten Alkoholen zu herbiziden Mitteln, die Glyphosat oder ein Salz davon enthalten. Neben ethoxylierten Alkohole, deren Alkylreste linear sind, werden auch Guerbet-Alkoholalkoxylate mit einer Gesamtzahl an Kohlenstoffatomen im Alkoholteil von 12 oder 16 erwähnt.

In WO 01/77276 ist die Verwendung bestimmter Alkoholalkoxylate als Tenside in der metallverarbeitenden Industrie, als Tenside bei der Herstellung und Verarbeitung von Textilien, als Tenside in der Leder-, Papier-, Druck-, Galvano- und Photoindustrie, als Tenside bei der Wasserbehandlung, als Tenside in Pflanzenschutz-Formulierungen, oder als Tenside oder Emulgatoren in der kunststoffherstellenden und -verarbeitenden Industrie beschrieben. Es wird die Herstellung von 2-Propylheptanol + 10 EO + 1,5 Pentenoxid beschreiben.

Diesen Verwendungen als Tensid liegt insbesondere die schaumdämpfende Wirkung der Alkoholalkoxylate zugrunde, weshalb der Zweck der Verwendung in besagten Bereichen im Wesentlichen auf Reinigungs- und Waschprozesse abzielt. Auch ist es allgemein bekannt, Tenside aufgrund ihrer oberflächenaktiven Eigenschaften als Dispergierhilfsmittel oder als Emulgator einzusetzen. In diesem Zusammenhang ist auch der beiläufig erwähnte Einsatz der Tenside in Pflanzenschutzformulierungen zu sehen.

US 5,661,121 betrifft alkoxylierte 2-Propylheptanole, nicht aber deren Einsatz im Pflanzenschutzbereich.

Der vorliegenden Erfindung liegt die Aufgabe zugrunde, weitere Anwendungen derartiger Alkoxylate von 2-Propylheptanolen zur Verfügung zu stellen.

Diese Aufgabe löst die vorliegende Erfindung durch die Verwendung alkoxylierter 2-Propylheptanole als Adjuvans und die Bereitstellung von Mitteln zur Pflanzenbehandlung, die diese Alkoxylate enthalten.

Gegenstand der vorliegenden Erfindung ist daher die Verwendung eines alkoxylierten 2-Propylheptanols der Formel (I)

R-O-(CₘH₂ₘO)ₓ-(CₙH₂ₙO)_{y}-(CₚH₂ₚO)_{z}-H (I)

worin
- R: für 2-Propylheptyl steht;
- m, n, p: unabhängig voneinander für eine ganze Zahl von 2 bis 16 stehen;
- x+y+z: einem Wert von 1 bis 100 entsprechen,
als Adjuvans bei der Behandlung von Pflanzen.

Gegenstand der vorliegenden Erfindung sind auch Mittel, umfassend
(a) wenigstens einen Wirkstoff zur Pflanzenbehandlung; und
(b) wenigstens ein alkoxyliertes 2-Propylheptanol der Formel (I)

R-O-(CₘH₂ₘO)ₓ-(CₙH₂ₙO)_{y}-(CₚH₂ₚO)_{z}-H (I)

worin
- R: für 2-Propylheptyl steht;
- m, n, p: unabhängig voneinander für 2 oder 3 stehen;
- x+y+z: einem Wert von 1 bis 100 entsprechen.

Die erfindungsgemäß zu verwendenden Alkoxylate weisen adjuvante, insbesondere wirkungsfördernde Eigenschaften auf. So ermöglicht der Zusatz derartiger Alkoxylate eine beschleunigte Aufnahme von Wirkstoffen durch eine mit dem Wirkstoff zu behandelnde Pflanze. Aus der adjuvanten Wirkung leiten sich insbesondere folgende Aspekte bei der Behandlung von Pflanzen mit einem oder mehreren Wirkstoffen ab:
- vergleichsweise höhere Wirksamkeit des Wirkstoffs bei gegebener Aufwandmenge;
- vergleichsweise geringere Aufwandmenge bei gegebener Wirkung;
- vergleichsweise stärkere Aufnahme des Wirkstoffs durch die Pflanze, insbesondere über das Blatt, und damit Vorteile im Nachlaufverfahren, insbesondere bei der Sprühbehandlung von Pflanzen.

Die erfindungsgemäße Verwendung ist insbesondere auf den Pflanzenanbau, die Landwirtschaft und den Gartenbau gerichtet. Insbesondere dient sie zur Kontrolle unerwünschten Pflanzenwachstums.

Demnach betrifft die vorliegende Erfindung auch obigen Verwendungszwecken entsprechende Verfahren zur Behandlung von Pflanzen, wobei man eine geeignete Menge an erfindungsgemäßem Alkoxylat appliziert.

Besondere Vorteile werden insbesondere im Anbau von Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera, Zea mays erzielt.

Darüber hinaus können die erfindungsgemäß zu verwendenden Alkoxylate auch in Kulturen, die gegen die Wirkung von Herbiziden tolerant sind, verwendet werden. Derartige Kulturen können beispielsweise durch Züchtung und auch gentechnische Methoden erhalten werden.

Der Alkoholteil der erfindungsgemäß zu verwendenden Alkoholalkoxylate basiert auf an sich bekannten 2-Propylheptanolen oder 2-Propylheptanolgemischen mit 10 Kohlenstoffatomen.

Der Alkoholteil der zu verwendenden Alkoxylate ist verzweigt.

Eine allgemeine Synthesemöglichkeit zur Herstellung verzweigter Alkohole ist z.B. die Umsetzung von Aldehyden oder Ketonen mit Grignard-Reagenzien (Grignard-Synthese). Anstelle von Grignard-Reagenzien können auch Aryl- oder Alkyl-Lithiumverbindungen eingesetzt werden, die sich durch ein höheres Reaktionsvermögen auszeichnen. Des weiteren können die verzweigten Alkohole durch Aldolkondensation erhalten werden, wobei die Reaktionsbedingungen dem Fachmann bekannt sind.

Die Alkoxylierung ergibt sich aus der Umsetzung mit geeigneten Alkylenoxiden, die in der Regel 2 bis 15 und vorzugsweise 2 bis 6 Kohlenstoffatome aufweisen. Zu nennen sind hier insbesondere Ethylenoxid (EO), Propylenoxid (PO), Butylenoxid (BO), Pentylenoxid (PeO) und Hexylenoxid (HO).

Ein Typ zu verwendender Alkoholalkoxylate basiert auf einer Alkylenoxid-Art.

Ein weiterer Typ zu verwendener Alkoholalkoxylate basiert auf wenigstens zwei verschiedenen Alkylenoxid-Arten. Dabei ist es bevorzugt, mehrere Alkylenoxid-Einheiten einer Art als Block anzuordnen, so dass sich wenigstens zwei unterschiedliche Alkylenoxid-Blöcke ergeben, die jeweils aus mehreren Einheiten gleicher Alkylenoxide gebildet werden. Sofern derartige Blockalkoxylate verwendet werden, ist es bevorzugt, dass sich der Alkylenoxid-Teil aus 3 und insbesondere aus 2 Blöcken zusammensetzt.

Einem Aspekt zufolge ist es bevorzugt, dass die erfindungsgemäß zu verwendenden Alkoholalkoxylate ethoxyliert sind bzw. wenigstens einen Ethylenoxid-Block aufweisen. Einem weiteren Aspekt zufolge werden Ethylenoxid-Blöcke insbesondere mit Propylenoxid-oder Pentylenoxid-Blöcken kombiniert.

In Abhängigkeit von den für die Umsetzung gewählten Einsatzmengen an Alkylenoxid(en) sowie den Reaktionsbedingungen ergibt sich der jeweilige Alkoxylierungsgrad. Hierbei handelt es sich in der Regel um einen statistischen Mittelwert, da die Anzahl von Alkylenoxid-Einheiten der aus der Umsetzung resultierenden Alkoholalkoxylate variiert.

Der Alkoxylierungsgrad, d.h. die mittlere Kettenlänge der Polyetherketten erfindungsgemäß zu verwendender Alkoholalkoxylate kann durch das Molmengenverhältnis von Alkohol zu Alkylenoxid bestimmmt werden. Bevorzugt sind Alkoholalkoxylate mit etwa 1 bis 100, bevorzugt etwa 2 bis 15, insbesondere 3 bis 12, vor allem 4 bis 12 und besonders 5 bis 12 Alkylenoxideinheiten.

Die Umsetzung der Alkohole bzw. Alkoholgemische mit dem/den Alkylenoxid(en) erfolgt nach üblichen, dem Fachmann bekannten Verfahren und in dafür üblichen Apparaturen.

Die Alkoxylierung kann durch starke Basen, wie Alkalihydroxide und Erdalkalihydroxide, Brönstedsäuren oder Lewissäuren, wie AlCl₃, BF₃ etc. katalysiert werden. Für eng verteilte Alkoholoxylate können Katalysatoren wie Hydrotalcit oder DMC verwendet werden.

Die Alkoxylierung erfolgt vorzugsweise bei Temperaturen im Bereich von etwa 80 bis 250 °C, bevorzugt etwa 100 bis 220 °C. Der Druck liegt vorzugsweise zwischen Umgebungsdruck und 600 bar. Gewünschtenfalls kann das Alkylenoxid eine Inertgasbeimischung, z. B. von etwa 5 bis 60 %, enthalten.

Gemäß einer besonderen Ausführungsform werden Alkoholalkoxylate der Formel (I) verwendet, worin m = 2 und der Wert von x größer als Null ist. Hierbei handelt es sich um Alkoholalkoxylate vom EO-Typ, zu denen vor allem Alkoholethoxylate (m = 2; x > Null; y, z = Null) und Alkoholalkoxylate mit einem an den Alkoholteil gebundenen EO-Block gehören (m = 2; x > Null; y und/oder z > Null). Von den Alkoholalkoxylaten mit einem an den Alkoholteil gebundenen EO-Block sind vor allem EO-PO-Blockalkoxylate (m = 2; x > Null; y > Null; n = 3; z = O), EO-PeO-Blockalkoxylate (m = 2; x > Null; y > Null; n = 5; z = O) und EO-PO-EO-Blockalkoxylate (m, p = 2; x, z > Null; y > Null; n = 3) zu nennen.

Bevorzugt sind EO-PO-Blockalkoxylate, bei denen das Verhältnis von EO zu PO (x zu y) 1:1 bis 4:1 und insbesondere 1,5:1 bis 3:1 beträgt. Dabei beträgt der Ethoxylierungsgrad (Wert von x) in der Regel 1 bis 20, vorzugsweise 2 bis 15 und insbesondere 4 bis 10, der Propoxylierungsgrad (Wert von y) in der Regel 1 bis 20, vorzugsweise 1 bis 8 und insbesondere 2 bis 5. Der Gesamtalkoxylierungsgrad, d.h. die Summe aus EO- und PO-Einheiten beträgt in der Regel 2 bis 40, vorzugsweise 3 bis 25 und insbesondere 6 bis 15.

Weiterhin bevorzugt sind EO-PeO-Blockalkoxylate, bei denen das Verhältnis von EO zu PeO (x zu y) 2 : 1 bis 25 : 1 und insbesondere 4 : 1 bis 15 : 1 beträgt. Dabei beträgt der Ethoxylierungsgrad (Wert von x) in der Regel 1 bis 50, vorzugsweise 4 bis 25 und insbesondere 6 bis 15, der Pentoxylierungsgrad (Wert von y) in der Regel 0,5 bis 20, vorzugsweise 0,5 bis 4 und insbesondere 0,5 bis 2. Der Gesamtalkoxylierungsgrad, d.h. die Summe aus EO-und PeO-Einheiten beträgt in der Regel 1,5 bis 70, vorzugsweise 4,5 bis 29 und insbesondere 6,5 bis 17.

Gemäß einer weiteren besonderen Ausführungsform werden Alkoholalkoxylate der Formel (I) verwendet, worin n = 2, die Werte von x und y beide größer als Null und z = O sind. Auch hierbei handelt es sich um Alkoholalkoxylate vom EO-Typ, bei denen der EO-Block allerdings terminal gebunden ist. Zu diesen gehören vor allem PO-EO-Blockalkoxylate (n = 2; x > Null; y > Null; m = 3; z = O) und PeO-EO-Blockalkoxylate (n = 2; x > Null; y > Null; m = 5; z = O).

Bevorzugt sind PO-EO-Blockalkoxylate, bei denen das Verhältnis von PO zu EO (x zu y) 1:10 bis 3:1 und insbesondere 1,5:1 bis 1:6 beträgt. Dabei beträgt der Ethoxylierungsgrad (Wert von y) in der Regel 1 bis 20, vorzugsweise 2 bis 15 und insbesondere 4 bis 10, der Propoxylierungsgrad (Wert von x) in der Regel 0,5 bis 10, vorzugsweise 0,5 bis 6 und insbesondere 1 bis 4. Der Gesamtalkoxylierungsgrad, d.h. die Summe aus EO- und PO-Einheiten beträgt in der Regel 1,5 bis 30, vorzugsweise 2,5 bis 21 und insbesondere 5 bis 14.

Weiterhin bevorzugt sind PeO-EO-Blockalkoxylate, bei denen das Verhältnis von PeO zu EO (x zu y) 1 : 50 bis 1 : 3 und insbesondere 1 : 25 bis 1 : 5 beträgt. Dabei beträgt der Pentoxylierungsgrad (Wert von x) in der Regel 0,5 bis 20, vorzugsweise 0,5 bis 4 und insbesondere 0,5 bis 2, der Ethoxylierungsgrad (Wert von y) in der Riegel 3 bis 50, vorzugsweise 4 bis 25 und insbesondere 5 bis 15. Der Cesamtalkoxylierungsgrad, d.h. die Summe aus EO- und PeO-Einheiten beträgt in der Regel 3,5 bis 70, vorzugsweise 4,5 bis 45 und insbesondere 5,5 bis 17.

Gemäß einer weiteren besonderen Ausführungsform werden Alkoholalkoxylate der Formel (I) verwendet, worin die Werte von x, y und z allesamt größer als Null sind. Zu diesen gehören vor allem PeO-EO-PO-Blockalkoxylate (m = 5; x > Null; n = 2; y > Null; m = 3; z > Null).

### 2-Propylheptanole sind α-verzweigte Alkohole der Formel (II),

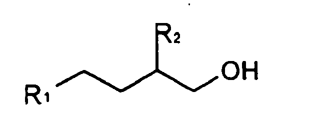

worin
- R¹, R²,: jeweils für n-Propyl stehen.

Derartige Alkohole werden auch als Guerbet-Alkohole bezeichnet. Diese können beispielsweise durch Dimerisierung entsprechender primärer Alkohole (R^{1,2} CH₂CH₂OH) bei erhöhter Temperatur, beispielsweise 180 bis 300 °C, in Gegenwart eines alkalischen Kondensationsmittels, wie Kaliumhydroxid, erhalten werden.

Erfindungsgemäß kommen vor allem Alkoxylate vom EO-Typ zur Anwendung. Insbesondere bevorzugt sind Ethoxylate, deren Ethoxylierungsgrad 1 bis 50, vorzugsweise 2 bis 20 und insbesondere etwa 3 bis 10 beträgt.

Die erfindungsgemäß zu verwendenden Alkoxylate weisen in der Regel einen relativ geringen Kontaktwinkel auf. Besonders bevorzugt sind Alkoxylate, deren Kontaktwinkel weniger als 120° und vorzugsweise weniger als 100° beträgt, wenn dieser anhand einer 2 Gew.-% Alkoxylat enthaltenden, wässrigen Lösung auf einer Paraffinoberfläche in an sich bekannter Art und Weise bestimmt wird.

Die oberflächenaktiven Eigenschaften der Alkoxylate hängen einem Aspekt zufolge von Art und Verteilung der Alkoxylat-Gruppierung ab. Die nach der Pendant Drop Methode bestimmbare Oberflächenspannung erfindungsgemäß zu verwendender Alkoxylate liegt vorzugsweise in einem Bereich von 25 bis 70 mN/m und insbesondere 28 bis 50 mN/m für eine 0,1 Gew.% Alkoxylat enthaltende Lösung, in einem Bereich von 25 bis 70 mN/m und insbesonden 28 bis 45 mN/m für eine 0,5 Gew.% Alkoxylat enthaltende Lösung. Erfindungsgemäß bevorzugt zu verwendende Alkoxylate qualifizieren daher als amphiphile Substanzen.

Anteile der Komponente (b) am Gesamtgewicht des Mittels von mehr als 1 Gew.-%, vorzugsweise von mehr als 5 Gew.-% und insbesondere von mehr als 10 Gew.-% sind von Vorteil. Andererseits sind Anteile der Komponente (b) am Gesamtgewicht des Mittels von weniger als 50 Gew.-%, vorzugsweise von weniger als 45 Gew.-% und insbesondere von weniger als 40 Gew.-% in der Regel zweckmäßig.

Der Wirkstoff (Komponente (a)) kann ausgewählt sein unter Herbiziden, Fungiziden, Insektiziden, Akariziden, Nematiziden, sowie wirkstoffen, die das Pflanzenwachstum regulieren.

Herbizide Pflanzenschutzmittel können einen oder mehrere beispielsweise der folgenden herbiziden Pflanzenschutz-Wirkstoffe enthalten:
1,3,4-Thiadiazole wie Buthidazole und Cyprazole, Amide wie Allidochlor, Benzoylpropethyl, Bromobutide, Chlorthiamid, Dimepiperate, Dimethenamid, Diphenamid, Etobenzanid, Flampropmethyl, Fosamin, Isoxaben, Monalide, Naptalame, Pronamid, Propanil, Aminophosphorsäuren wie Bilanafos, Buminafos, Glufosinateammonium, Glyphosate, Sulfosate, Aminotriazole wie Amitrol, Anilide wie Anilofos, Mefenacet, Aryloxyalkansäure wie 2,4-D, 2,4-DB, Clomeprop, Dichlorprop, Dichlorprop-P, Dichlorprop-P, Fenoprop, Fluroxypyr, MCPA, MCPB, Mecoprop, Mecoprop-P, Napropamide, Napropanilide, Triclopyr, Benzoesäuren wie Chloramben, Dicamba, Benzothiadiazinone wie Bentazon, Bleacher wie Clomazone, Diflufenican, Fluorochloridone, Flupoxam, Fluridone, Pyrazolate, Sulcotrione, Carbamate wie Carbetamid, Chlorbufam, Chlorpropham, Desmedipham, Phenmedipham, Vernolate, Chinolinsäuren wie Quinclorac, Quinmerac, Dichlorpropionsäuren wie Dalapon, Dihydrobenzofurane wie Ethofumesate, Dihydrofuran-3-on wie Flurtamone, Dinitroaniline wie Benefin, Butralin, Dinitramin, Ethalfluralin, Fluchloralin, Isopropalin, Nitralin, Oryzalin, Pendimethalin, Prodiamine, Profluralin, Trifluralin, Dinitrophenole wie Bromofenoxim, Dinoseb, Dinoseb-acetat, Dinoterb, DNOC, Minoterb-Acetat, Diphenylether wie Acifluorfen-sodium, Aclonifen, Bifenox, Chlornitrofen, Difenoxuron, ethoxyfen, Fluorodifen, Fluoroglycofen-ethyl, Fomesafen, Furyloxyfen, Lactofen, Nitrofen, Nitrofluorfen, Oxyfluorfen, Dipyridyle wie Cyperquat, Difenzoquat-methylsulfat, Diquat, Paraquat-dichlorid, Imidazole wie Isocarbamid, Imidazolinone wie Imazamethapyr, Imazapyr, Imazaquin, Imazethabenz-methyl, Imazethapyr, Oxadiazole wie Methazole, Oxadiargyl, Oxadiazon, Oxirane wie Tridiphane, Phenole wie Bromoxynil, Ioxynil, Phenoxyphenoxypropionsäureester wie Clodinafop, Cyhalofop-butyl, Diclofop-methyl, Fenoxaprop-ethyl, Fenoxaprop-p-ethyl, Fenthiapropethyl, Fluazifop-butyl, Fluazifop-p-butyl, Haloxyfop-ethoxyethyl, Haloxyfop-methyl, Haloxyfop-p-methyl, Isoxapyrifop, Propaquizafop, Quizalofop-ethyl, Quizalofop-p-ethyl, Quizalofop-tefuryl, Phenylessigsäuren wie Chlorfenac, Phenylpropionsäuren wie Chlorophenprop-methyl, ppi-Wirkstoffe wie Benzofenap, Flumiclorac-pentyl, Flumioxazin, Flumipropyn, Flupropacil, Pyrazoxyfen, Sulfentrazone, Thidiazimin, Pyrazole wie Nipyraclofen, Pyridazine wie Chloridazon, Maleic hydrazide, Norflurazon, Pyridate, Pyridincarbonsäuren wie Clopyralid, Dithiopyr, Piclorom, Thiazopyr, Pyrimidylether wie Pyrithiobacsäure, Pyrithiobac-sodium, KIH-2023, KIH-6127, Sulfonamide wie Flumetsulam, Metosulam, Triazolcarboxamide wie Triazofenamid, Uracile wie Bromacil, Lenacil, Terbacil, ferner Benazolin, Benfuresate, Bensulide, Benzofluor, Butamifos, Cafenstrole, Chlorthal-dimethyl, Cinmethylin, Dichlobenil, Endothall, Fluorbentranil, Mefluidide, Perfluidone, Piperophos.
Bevorzugte herbizide Pflanzenschutz-Wirkstoffe sind solche vom Sulfonylharnstoff-Typ wie Amidosulfuron, Azimsulfuron, Bensulfuron-methyl, Chlorimuron-ethyl, Chlorsulfuron, Cinosulfuron, Cyclosulfamuron, Ethametsulfuron-methyl, Flazasulfuron, Halosulfuron-methyl, Imazosulfuron, Metsulfuron-methyl, Nicosulfuron, Primisulfuron, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl, Tritosulfuron.
Weiterhin bevorzugte herbizide Pflanzenschutz-Wirkstoffe sind solche vom Cyclohexenon-Typ wie Alloxydim, Clethodim, Cloproxydim, Cycloxydim, Sethoxydim und Tralkoxydim.
Ganz besonders bevorzugte herbizide Wirkstoffe vom Cyclohexenon-Typ sind: Tepraloxydim (vgl. AGROW, Nr. 243, 3.11.95, Seite 21, Caloxydim) und 2-(1-[2-{4-Chlorphenoxy}propyloxyimino]butyl)-3-hydroxy-5-(2H-tetrahydrothiopyran-3-yl)-2-cyclohexen-1-on und vom Sulfonylharnstoff-Typ: N-(((4-methoxy-6-[trifluormethyl]-1,3,5-triazin-2-yl)amino)carbonyl)-2-(trifluormethyl)-benzolsulfonamid.
Die fungiziden Mittel enthalten einen oder mehrere beispielsweise der folgenden fungiziden Wirkstoffe: Schwefel, Dithiocarbamate und deren Derivate, wie Ferridimethyl-dithiocarbamat, Zinkdimethyldithiocarbamat, Zinkethylenbisdithiocarbamat, Manganethylenbisdithiocarbamat, Mangan-Zink-ethylendi-amin-bis-dithiocarbamat, Tetramethyl-thiuramdisulfide, Ammoniak-Komplex von Zink-(N,N-ethylen-bis-dithiocarbamat), Ammoniak-Komplex von Zink-(N,N'-propylen-bis-dithiocarbamat), Zink-(N,N'-propylenbis-dithiocarbamat), N,N'-Polypropylen-bis-(thiocarba-moyl)disulfid;
Nitroderivate, wie Dinitro-(1-methylheptyl)-phenylcrotonat, 2-sec-Butyl-4,6-dinitrophenyl-3,3-dimethylacrylat, 2-sec-Butyl-4,6-dinitrophenyl-isopropylcarbonat, 5-Nitro-isophthalsäure-di-isopropylester;
heterocyclische Substanzen, wie 2-Heptadecyl-2-imidazolin-acetat, 2,4-Dichlor-6-(o-chloranilino)-s-triazin, o,o-Diethyl-phthal-imidophosphonothioat, 5-Amino-1-(bis-(dimethylamino)-phosphinyl)-3-phenyl-1,2,4-triazol, 2,3-Dicyano-1,4-dithioanthrachinon, 2-Thio-1,3-dithiolo(4,5-b)chinoxalin, 1-(Dutylcarbamoyl)-2-benz-imidazol-carbaminsäuremethylester, 2-Methoxycarbonylamino-benz-imidazol, 2-(Furyl-(2))-benzimidazol, 2-(Thiazolyl-(4)-benz-imidazol, N-(1,1,2,2-Tetrachlorethylthio)-tetrahydrophthalimid, N-Trichlormethylthio-tetrahydrophthalimid, N-Trichlormethylthio-phthalimid,
N-Dichlorfluormethylthio-N',N'-dimethyl-N-phenyl-schwefelsäurediamid, 5-Ethoxy-3-trichlormethyl-1,2,3-thiadiazol, 2-Rhodan-methylthiobenzthiazol, 1,4-Dichlor-2,5-dimethoxybenzol, 4-(2-Chlorphenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxathiin, 2,3-Dihydro-5-carboxani-lido-6-methyl-1,4-oxathiin-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexyl-amid, N-Cyclohexyl-N-methoxy-2,5-dimethyl-furan-3-carbonsäure-amid, 2-Methyl-benzoesäure-anilid, 2-Iod-benzoesäure-anilid, N-Formyl-N-morpholin-2,2,2-trichlorethylacetal, Piperazin-1,4-di-ylbis-(1-(2,2,2-trichlor-ethyl)-formamid, 1-(3,4-Dichloranilino)-1-formylamino-2,2,2-trichlorethan, 2,6-Dimethyl-N-tridecylmorpholin bzw. dessen Salze, 2,6-Dimethyl-N-cyclododecyl-morpholin bzw. dessen Salze, N-[3-(p-tert.-Butylphenyl)-2-methylpropyl]-cis-2,6-dimethylmorpholin, N-[3-(p-tert.-Butylphenyl)-2-methyl-propyl]-piperidin, 1-[2-(2,4-Dichlorphenyl)-4-ethyl-1,3-dioxolan-2-yl-ethyl]-1H-1,2,4-triazol, 1-[2-(2,4-Dichlorphenyl)-4-n-pro-pyl-1,3-dioxolan-2-yl-ethyl]-1H-1,2,4-thiazol, N-(n-Propyl)-N-(2,4,6-trichlorphenoxyethyl)-N'-imidazol-ylharnstoff, 1-(4-Chlorphenoxy)-3,3-dimethyl-1-(1H-1,2,4-triazol-1-yl)-2-butanon, 1-(4-chlorphenoxy)-3,3-dimethyl-1-(1H-1,2,4-triazol-1-yl)-2-butanol, (2RS,3RS)-1-[3-(2-Chlorphenyl)-2-(4-fluorphenyl)-oxiran-2-ylmethyl]-1H-1,2,4-triazol, α-(2-Chlorphenyl)-α-(4-chlorphenyl)-5-pyrimidin-methanol, 5-Butyl-2-dimethylamino-4-hydroxy-6-methyl-pyrimidin, Bis-(p-chlorphenyl)-3-pyridinmethanol, 1,2-Bis-(3-ethoxycarbonyl-2-thioureido)-benzol, 1,2-Bis-(3-methoxycarbo-nyl-2-thioureido)-benzol,
Strobilurine wie Methyl-E-methoxyimino-[α-(o-tolyloxy)-o-tolyl]-acetat, Methyl-E-2-{2-[6-(2-cyanophenoxy)-pyrimidin-4-yloxy]-phe-nyl}-3-methoxyacrylat, Methyl-E-methoxyimino-[α-(2-phenoxyphe-nyl)]-acetamid, Methyl-E-methoxyimino-[α-(2,5-dimethylphenoxy)-o-tolyl]-acetamid,
Anilinopyrimidine wie N-(4,6-Dimethylpyrimidin-2-yl)-anilin, N-[4-Methyl-6-(1-propinyl)-pyrimidin-2-yl]-anilin, N-[4-Methyl-6-cyclopropyl-pyrimidin-2-yl]-anilin,
Phenylpyrrole wie 4-(2,2-Difluor-1,3-benzodioxol-4-yl)-pyrrol-3-carbonitril,
Zimtsäureamide wie 3-(4-Chlorphenyl)-3-(3,4-dimethoxyphenyl)-acrylsäuremorpholid,
sowie verschiedene Fungizide, wie Dodecylguanidinacetat, 3-[3-(3,5-Dimethyl-2-oxycyclohexyl)-2-hydroxyethyl]-glutarimid, Hexa-chlorbenzol, DL-Methyl-N-(2,6-dimethyl-phenyl)-N-furoyl(2)-ala-ninat, DL-N-(2,6-Dimethyl-phenyl)-N-(2'-methoxyacetyl)-alanin-methylester, N-(2,6-Dimethylphenyl)-N-chloracetyl-D,L-2-amino-butyrolacton, DL-N-(2,6-Dimethylphenyl)-N-(phenylacetyl)-alanin-methylester, 5-Methyl-5-vinyl-3-(3,5-dichlorphenyl)-2,4-dioxo-1,3-oxazolidin, 3-[3,5-Dichlorphenyl(-5-methyl-5-methoxymethyl]-1,3-oxazolidin-2,4-dion, 3-(3,5-Dichlorphenyl)-1-isopropylcarba-moylhydantoin, N-(3,5-Dichlorphenyl)-1,2-dimethylcyclopropan-1,2-dicarbonsäureimid, 2-Cyano-[N-(ethylaminocarbonyl)-2-meth-oximino]-acetamid, 1-[2-(2,4-Dichlorphenyl)-pentyl]-1H-1,2,4-triazol, 2,4-Difluor-a-(1H-1,2,4-triazolyl-1-methyl)-benzhydryl-alkohol, N-(3-Chlor-2,6-dinitro-4-trifluormethyl-phenyl)-5-tri-fluormethyl-3-chlor-2-aminopyridin, 1-((bis-(4-Fluorphenyl)-methylsilyl)-methyl)-1H-1,2,4-triazol.

Brauchbare Wachstumsregulatoren sind z.B. die Gruppe der Gibberelline. Dazu gehören z.B. die Gibberelline GA₁, GA₃, GA₄, GA₅ und GA₇ etc. und die entsprechenden exo-16,17-Dihydrogibberelline sowie die Derivate davon, z.B. die Ester mit C₁-C₄-Carbonsäuren. Erfindungsgemäß bevorzugt ist das exo-16, 17-Dihydro-CA₅-13-acetat.

Gemäß einer Ausführungsform der vorliegenden Erfindung besteht die Wirkstoffkomponente (a) im wesentlichen aus einem oder mehreren der folgenden bevorzugten Wirkstoffe: Bentazon, Difenzoquat, Pendimethalin, Quinclorac, Cycloxydim, Quinmerac, Sethoxydim, Ciaidon-ethyl, Mecoprop, Mecoprop-P, Dichlorprop, Chloridazon, Dicamba, Metobromuron, Profoxydim, Tritosulfuron, Diflufenzopyr, s-Dimethenamid, Cyanazine, Picolinafen, Cyclosulfamuron, Imazamethabenz-methyl, Imazaquin, Acifluorfen, Nicosulfuron, Sulfur, Dithianon, Tridemorph, Metiram, Nitrothal-Isopropyl, Thiophhanate-Methyl, Metholachlor, Triforine, Cerbendazim, Vinclozolin, Dodine, Fenpropimorph, Epoxiconazole, Kresoxim-methyl, Pyraclostrobin, Dimoxystrobin, Cyazofamid, Fenoxalin, Dimethomorph, Metconazole, Dimethoate, Chlorfenvinphos, Phorate, Fenbutatin oxide, Chrorfenapyr, Simazine, Bensulforon, Flufenoxuron, Terflubenzuron, Alphacypermetrin, Cypermethrin, Hydramehylnon, Terbufos, Temephos, Halofenozide, Flocoumafen, Triazamate, Flucythrinate, Hexythiazox, Dazomet, Chlorocholinchlorid, Mepiquatchlorid, Prohexadion-Ca, bzw. aus einem oder mehreren der folgenden ganz bevorzugten Wirkstoffe: Metazachlor, Paraquat, Glyphosat, Imazethaphyr, Tepraloxydim, Imazapic, Imazamox, Acetochlor, Atrazine, Tebufenpyrad, Trifluralin, Pyridaben.

Die vorliegende Erfindung betrifft insbesondere Mittel mit hohen wirkstoffanteilen (Konzentrate). So macht der Anteil der Komponente (a) am Gesamtgewicht des Mittels in der Regel mehr als 10 Gew.-%, vorzugsweise mehr als 15 Gew.-% und insbesondere mehr als 20 Gew.-% aus. Andererseits liegt der Anteil der Komponente (a) am Gesamtgewicht des Mittels zweckmäßigerweise in der Regel bei weniger als 80 Gew.-%, vorzugsweise bei weniger als 70 Gew.-% und insbesondere bei weniger als 60 Gew.-%.

Die erfindungsgemäßen Formulierungen können im übrigen übliche Hilfs- und/oder Zusatzstoffe für die Herstellung von Formulierungen im agrotechnischen Bereich und insbesondere auf dem Gebiet des Pflanzenschutzes enthalten. Dazu gehören beispielsweise Tenside, Dispergierhilfsmittel, Netzmittel, Verdickungsmittel, organische Lösungsmittel, Cosolventien, Entschäumer, Carbonsäuren, Konservierungsmittel, Stabilisierungsmittel, etc.

Gemäß einer besonderen Ausführungsform der vorliegenden Erfindung umfassen die Mittel als oberflächenaktive Komponente (c) wenigstens ein (weiteres) Tensid. Der Begriff "Tensid" bezeichnet hier grenzflächenaktive bzw. oberflächenaktive Mittel.

Die Komponente (c) wird insbesondere als Dispergator bzw. Emulgator, vor allem zum Dispergieren eines Feststoffanteils in Suspenaionskonzentraten, zugesetzt. Ferner können Teile der Komponente (c) als Netzmittel dienen.

Prinzipiell brauchbar sind anionische, kationische, amphotere und nichtionische Tenside, wobei Polymer-Tenside sowie Tenside mit Heteroatomen in der hydrophoben Gruppe eingeschlossen sind.

Zu den anionischen Tensiden gehören beispielsweise Carboxylate, insbesondere Alkali-, Erdalkali- und Ammoniumsalze von Fettsäuren, z.B. Kaliumstearat, die üblicherweise auch als Seifen bezeichnet werden; Acylglutamate; Sarkosinate, z.B. Natriumlauroylsarkosinat; Taurate; Methylcellulosen: Alkylphosphate, insbesondere Mono- und Diphosphorsäurealkylester; Sulfate, insbesondere Alkylsulfate und Alkylethersulfate; Sulfonate, weitere Alkyl- und Alkylarylsulfonate, insbesondere Alkali-, Erdalkali- und Ammoniumsalze von Arylsulfonsäuren sowie alkylsubstituierten Arylsulfonsäuren, Alkylbenzolsulfonsäuren, wie beispielsweise Lignin-und Phenolsulfonsäure, Naphthalin- und Dibutylnaphthalinaulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyl und Harnstoff, Mono-oder Dialkyl-bernsteinsäureestersulfonate; sowie Eiweißhydrolysate und Lignin-Sulfitablaugen. Die zuvor genannten Sulfonsäuren werden vorteilhafterweise in Form ihrer neutralen oder gegebenenfalls basischen Salze verwendet.

Zu den kationischen Tensiden gehören beispielsweise quaternierte Ammoniumverbindungen, insbesondere Alkyltrimethylammonium- und Dialkyldimethylammonium-Halogenide und -alkylsulfate sowie Pyridin- und Imidazolin-Derivate, insbesondere Alkylpyridinium-Halogenide.

Zu den nichtionischen Tensiden gehören beispielsweise weitere Alkoxylate und vor allem Ethoxylate sowie nichtionische Tenside, insbesondere
- Fettalkohol-polyoxyethylen-ester, beispielsweise Laurylalkohol-polyoxyethylenetheracetat,
- Alkyl-Polyoxyethylen- und -polyoxypropylen-ether, z.B. von linearen Fettalkoholen, Alkylarylalkohol-Polyoxyethylenether, z.B. Octylphenol-Polyoxyethylenether,
- alkoxylierte tierische und/oder pflanzliche Fette and/oder öle, beispielsweise Maisölethoxylate, Rizinusölethoxylate, Talgfettethoxylate,
- Glycerinester, wie beispielsweise Glycerinmonostearat,
- Fettalkoholalkoxylate und Oxoalkoholalkoxylate, insbesondere vom linearen Typ
   R₅O-(R₃O)ᵣ(R₄O)ₛR₂₀ mit R₃ und R₄ unabhängig voneinander = C₂H₄, C₃H₆, C₄H₈ und R₂₀ = H, oder C₁-C₁₂-Alkyl, R₅ = C₃-C₃₀-Alkyl oder C₆-C₁₀-Alkenyl, r und s unabhängig voneinander 0 bis 50, wobei nicht beide für 0 stehen können, Oleylalkohol-polyuxyethylenether,
- Alkylphenolalkoxylate, wie beispielsweise ethoxyliertes isoOctyl-, Octyl- oder Nonyl-phenol, Tributylphenol-polyoxyethylenether,
- Fettaminalkoxylate, Fettsäureamid- und Fettsäurediethanolamidalkoxylate, insbesondere deren Ethoxylate,
- Zuckertenside, Sorbitester, wie beispielsweise Sorbitanfettsäureester (Sorbitanmonooleat, Sorbitantristearat), Polyoxyethylensorbitanfettsäureester, Alkylpolyglycoside, N-Alkylgluconamide,
- Alkylmethylsulfoxide,
- Alkyldimethylphosphinoxide, wie beispielsweise Tetradecyldimethylphosphinoxid.

Zu den amphoteren Tensiden gehören beispielsweise Sulfobetaine, Carboxybetaine und Alkyldimethylaminoxide, z.B. Tetradecyldimethylaminoxid.

Zu den polymeren Tensiden gehören beispielsweise Di-, Tri- und Multiblockpolymere vom Typ (AB)ₓ, ABA und BAB, z.B. gegebenenfalls Endgruppen-verschlossene Ethylenoxid/Propylenoxid-Blockcopolymere, z.B. Ethylendiamin-EO/PO-Blockcopolymere, Polystyrol-Block-Polyethylenoxid, und AB-Kammpolymere, z.B. Polymethacrylat-comb-Polyethylenoxid.

Weitere Tenside, die hier beispielhaft genannt werden sollen, sind Perfluortenside, Silikontenside, z.B. Polyether-modifizierte Siloxane, Phospholipide, wie beispielsweise Lecithin oder chemisch modifizierte Lecithine, Aminosäuretenside, z.B. N-Lauroylglutamat und oberflächenaktive Homo- und Copolymere, z.B. Polyvinylpyrrolidon, Polyacrylsäuren in Form ihrer Salze, Polyvinylalkohol, Polypropylenoxid, Polyethylenoxid, Maleinsäureanhydrid-Isobuten-Copolymere und Vinylpyrrolidon-Vinylacetat-Copolymere.

Sofern nicht spezifiziert, handelt es sich bei den Alkylketten der oben aufgeführten Tenside nm lineare oder verzweigte Reste mit üblicherweise 8 bis 20 Kohlenstoffatomen.

Vorzugsweise ist das weitere Tensid im Rahmen der Komponente (c) ausgewählt unter nichtionischen Tensiden. Hiervon sind insbesondere diejenigen bevorzugt, die HLB-Werte im Bereich von 2 bis 16, vorzugsweise im Bereich von 5 bis 16, und insbesondere im Bereich von 8 bis 16 besitzen.

Der Anteil der Komponente (c) am Gesamtgewicht des Mittels beträgt - sofern vorhanden - in der Regel weniger als 50 Gew.-%, vorzugsweise weniger als 15 Gew.-% und insbesondere weniger als 5 Gew.-%.

Gemäß einer besonderen Ausführungsform der vorliegenden Erfindung umfassen die Mittel als Komponente (d) mindestens einen weiteren Hilfsstoff.

Die Komponente (d) kann vielerlei Zwecke erfüllen. Die Wahl geeigneter Hilfsstoffe erfolgt den Anforderungen entsprechend in üblicher Weise durch den Fachmann.

Beispielsweise sind weitere Hilfsstoffe ausgewählt unter
(d1) Lösungs- oder Verdünnungsmitteln;
(d2) Emulgatoren, Retentionsmitteln, pH-Puffern, Anti-Schaumstoffen.

Neben Wasser können die Mittel weitere Lösungsmittel löslicher Bestandteile bzw. Verdünnungsmittel unlöslicher Bestandteile des Mittels umfasssen.

Prinzipiell brauchbar sind beispielsweise Mineralöle, synthetische Öle sowie pflanzliche und tierische Öle, sowie niedermolekulare hydrophile Lösungsmittel wie Alkohle, Ether, Ketone und ähnliches.

Einerseits sind daher aprotische bzw. apolare Lösungs- bzw. Verdünnungsmittel zu nennen, wie Mineralölfraktionen von mittlerem bis hohem Siedepunkt, z.B. Kerosin und Dieselöl, ferner Kohlenteeröle, Kohlenwasserstoffe, Paraffinöle, z.B. C₈- bis C₃₀-Kohlenwasserstoffe der n- oder iso-Alkan-Reihe oder Gemische davon, gegebenenfalls hydrierte oder teilhydrierte Aromaten oder Alkylaromaten aus der Benzol- oder Naphthalin-Reihe, z.B. aromatische oder cycloaliphatische C₇- bis C₁₈-Koh lenwasserstoffverbindungen, aliphatische oder aromatische Carbonsäure- oder Dicarbonsäureester, Fette oder Öle pflanzlichen oder tierischen Ursprungs, wie Mono-, Di- und Triglyceride, in Reinform oder als Gemisch beispielsweise in Form öliger Naturstoffextrakte, z.B. Olivenöl, Sojaöl, Sonnenblumenöl, Castoröl, Sesamöl, Maisöl, Erdnussöl, Rapsöl, Leinsamenöl, Mandelöl, Rhizinusöl, Safloröl, sowie deren Raffinate, z.B. hydrierte oder teilhydrierte Produkte davon und/oder deren Ester, insbesondere Methyl- und Ethylester.

Beispiele für C₈- bis C₁₀-Kohlenwasserstoffe der n- oder iso-Alkan-Reihe sind n- und iso-Octan, -Decan, -Hexadecan, -Octadecan, -Eicosan, und vorzugsweise Kohlenwasserstoffgemische, wie Paraffinöl (das in technischer Qualität bis zu etwa 5% Aromaten enthalten kann) und ein C₁₈-C₂₄-Gemisch, das unter der Bezeichnung Spraytex-öl im Handel von der Fa. Texaco erhältlich ist.

Zu den aromatischen oder cycloaliphatischen C₇- bis C₁₈-Kohlenwasserstoffverbindungen gehören insbesondere aromatische oder cycloaliphatische Lösungsmittel aus der Alkyl-Aromatenreihe. Diese Verbindungen können unhydriert, teilhydriert oder vollständig hydriert sein. Zu derartigen Lösungsmitteln gehören insbesondere Mono-, Di- oder Trialkylbenzole, Mono-, Di-, Trialkyl-substituierte Tetraline und/oder Mono-, Di-, Tri- oder Tetraalkyl-substituierte Naphthaline (Alkyl steht vorzugsweise für C₁-C₆-Alkyl). Beispiele derartiger Lösungsmittel sind Toluol; o-, m-, p-Xylol, Ethylbenzol, Isopropylbenzol, tert.-Butylbenzol und Gemische, wie die unter der Bezeichnung Shellsol und Solvesso vertriebenen Produkte der Fa. Exxon, z.B. Solvesso 100, 150 und 200.

Beispiele für geeignete Monocarbonsäureester sind Ölsäureester, insbesondere Methyloleat und Ethyloleat, Laurinsäureester, insbesondere 2-Ethylhexyllaurat, Octyllaurat und Isopropyllaurat, Isopropylmyristat, Palmitinsäureester, insbesondere 2-Ethylhexylpalmitat und Isopropylpalmitat, Stearinsäureester, insbesondere Stearinsäure-n-butylester und 2-Ethylhexansäure-2-ethylhexylester.

Beispiele für geeignete Dicarbonsäureester sind Adipinsäureester, insbesondere Dimethyladipat, Di-n-butyladipat, Di-n-octyladipat, Di-iso-octyladipat, auch als Bis-(2-ethylhexyl)adipat bezeichnet, Di-n-nonyladidipat, Di-iso-nonyladidipat und Ditridecyladipat; Bernsteinsäureester, insbesondere Di-n-octylsuccinat und Di-isooctylsuccinat, und Di-(iso-nonyl)cyclohexan-1,2-dicarboxylat.

Der Anteil der zuvor beschriebenen aprotischen Lösungs- bzw. Verdünnungsmitteln am Gesamtgewicht des Mittels beträgt in der Regel weniger als 80 Gew.-%, vorzugsweise weniger als 50 Gew.-% und insbesondere weniger als 30 Cew.-%.

Einige dieser aprotischen Lösungs- bzw verdünnungsmittel können ebenfalls adjuvante, d.h. insbesondere wirkungsfördernde Eigenschafte, haben. Dies gilt insbesondere für besaqte Mono- und Diearbonsäureester. Unter diesem Aspekt können derartige Adjuvantien auch als Teil einer weiteren Formulierung (stand alone-Produkt) mit den erfindungsgemäßen Alkoholalkoxylaten bzw. diese enthaltenden Mitteln zu einem zweckmäßigen Zeitpunkt, in der Regel kurz vor der Applikation, vermischt werden.

Andererseits sind protische bzw. polare Lösungs- bzw. Verdünnungsmittel zu nennen, z.B. C₂-C₈-Monoalkohole wie Ethanol, Propanol, Isopropanol, Butanol, Isobutanol, tert-Butanol, Cyclohexanol und 2-Ethylhexanol, C₃-C₈-Ketone wie Diethylketon, t-Butylmethylketon und Cyclohexanon, sowie aprotische Amine, wie N-Methyl- und N-Octylpyrrolidon.

Der Anteil der zuvor beschriebenen protischen bzw. polaren Lösungs- bzw. Verdünnungsmitteln am Gesamtgewicht des Mittels beträgt in der Regel weniger als 80 Gew.-%, vorzugsweise weniger als 50 Gew.-% und insbesondere weniger als 30 Gew.-%.

Auch Antiabsetzmittel können insbesondere für Suspensionskonzentrate verwendet werden. Diese dienen vor allem zur rheologischen Stabilisierung. Insbesondere sind in diesem Zusammenhang mineralische Produkte, z.B. Bentonite, Talcite und Herktorite, zu nennen.

Weitere gegebenenfalls brauchbare Zusätze sind z.B. unter Mineralsalzlösungen, welche zur Behebung von Ernährungs- und Spurenelementmängeln eingesetzt werden, nichtphytotoxischen Ölen und Ölkonzentraten, Antidriftreagenzien, Antischaummitteln, insbesondere solchen vom Silicon-Typ, beispielsweise das von der Firma Wacker vertriebene Silicon SL, und ähnlichem zu finden.

Die Formulierungen können als emulgierbares Konzentrat (EC), Suspoemulsion (SE), Öl-in-Wasser-Emulsion (O/W), Wasser-in-Öl-Emulsion (W/O), wässriges Suspensionskonzentrat, Öl-Suspensionskonzentrat (SC), Mikroemulsion (ME), etc. vorliegen.

Die Herstellung der Mittel kann in an sich bekannter Weise erfolgen. Dazu werden zumindest Teile der Komponenten zusammengegeben.

Hierbei ist zu beachten, daß Produkte, insbesondere handelsübliche Produkte, verwendet werden können, deren Bestandteile zu unterschiedlichen Komponenten beitragen können. Beispielsweise kann ein bestimmtes Tensid in einem aprotischen Lösungmittel gelöst sein, so daß dieses Produkt zu verschiedenen Komponenten beitragen kann. Ferner können unter Umständen auch geringe Anteile an weniger erwünschten Substanzen mit handelsüblichen Produkten eingebracht werden. Als Gemisch sind die zusammenqegebenen Produkte dann in der Regel intensiv miteinander zu einem homogenen Gemisch zu vermengen und erforderlichenfalls - z.B. im Falle von Suspensionen, zu vermahlen.

Das vermengen kann in an sich bekannter weise erfolgen, z.B. durch Homogenisieren mit geeigneten Vorrichtungen wie KPG- oder Magnetrührern.

Auch das Vermahlen ist ein an sich bekannter Vorgang. Als Mahlkörper kann man Glasmahlkörper oder andere mineralische oder metallische Mahlkörper, in der Regel in einer Größe von 0,1-30 mm und insbesondere von 0,6-2 mm verwenden. Man zerkleinert das Gemisch in der Regel solange, bis die gewünschte Partikelgröße erreicht ist.

Allgemein kann die Vermahlung in Kreisfahrweise, d.h. laufendes Umpumpen beispielsweise eines SCs im Kreis, oder mittels Passagenfahrweise, d.h. komplettes und wiederholtes Durchpumpen beziehungsweise Durchfahren eines Ansatzes, durchgeführt werden.

Die Vermahlung kann mit herkömmlichen Kugel-, Perl- oder Rührwerksmühlen erfolgen, z.B. in einer Dynomühle (Fa. Bachofen), mit Ansatzgrößen von beispielsweise 0,5 bis zu 1 Liter in sogenannter Passagenfahrweise. Nach mehreren - insbesondere 4 bis 6 - Passagen (Durchpumpen der Aufschlämmung durch die Mühle mit Hilfe einer Schlauchpumpe) werden dabei nach mikroskopischer Auswertung mittlere Partikelgrößen von 0,5 bis 10 µm erreicht.

Die Mittel werden vor Gebrauch in der Regel durch Verdünnen in üblicher Weise in eine zur Anwendung brauchbare Form überführt. Bevorzugt ist das Verdünnen mit Wasser oder auch aprotischen Lösungsmitteln, beispielsweise im Tankmixverfahren. Die Verwendung in Form einer Spritzbrühen-Zubereitung ist bevorzugt. Appliziert werden kann im Vorauflauf- oder Nachauflaufverfahren. Besondere Vorteile ergeben sich im Nachauflaufverfahren.

Die erfindungsgemäße Verwendung umfasst auch den Einsatz der erfindungsgemäßen Alkoxylate als "stand-alone"-Produkt. Dazu werden die Alkoxylate in geeigneter weise hergerichtet, um kurz vor der Anwendung dem zu applizierenden Mittel zugesetzt zu werden.

Vor allem bei der Sprühbehandlung ergeben sich besondere Vorteile. Für eine übliche Tankmix-Spritzbrühe werden die erfindungsgemäßen, bereits wenigstens einen alkoxylierten verzweigten Alkohol enthaltenden Mittel - oder weitere Pflanzenbehandlungsmittel unter Zusatz wenigstens eines alkoxylierten verzweigten Alkohols als "stand-alone"-Produkt - so mit Wasser verdünnt, dass pro ha etwa 0,01 bis 10, vorzugsweise etwa 0,05 bis 5 und insbesondere 0,1 bis 1 kg wenigstens eines erfindungsgemäßen Alkoxylats appliziert werden.

Im Rahmen der vorliegenden Beschreibung sind Mengenangaben im Allgemeinen auf das Gesamtgewicht eines Mittels zu beziehen, sofern nicht anderes angeben ist. Der Ausdruck "im Wesentlichen" bezeichnet erfindungsgemäß in der Regel ein prozentuales Verhältnis von wenigstens 80 %, vorzugsweise von wenigstens 90 % und insbesondere von wenigstens 95 %.

Die Erfindung wird durch die nachfolgenden Beispiele näher erläutert:

### Herstellungsbeispiele

### Referenzbeispiel 1:

Herstellung des Alkoxylats (a)

### Referenzbeispiel 1: 2-Propylheptanol + 7 EO (a)

In einem Autoklaven wurden 711 g 2-Propylheptanol (entsprechend 4,5 mol) zusammen mit 2,0 g Kaliumhydroxid als Alkoxylierungskatalysator vorgelegt. Nach einer Entwässerungsphase wurden bei 150 °C kontinuierlich 1386 g Ethylenoxid (entsprechend 31,5 mol) eingegast. Zur Vervollständigung der Umsetzung wurde 1 h bei derselben Temperatur nachgerührt. Man erhielt 2080 g des oben genannten Produktes (a).

### Beispiel 1: Herbizide Wirksamkeit der Bentazon-Formulierungen

Die Applikation der Alkoxylate erfolgte im Tankmixverfahren zusammen mit Basagran (480 g/l Bentazon)oder BAS 635 H (71,4 Gew.-% Tritosulfuron). Die Aufwandmenge pro ha betrug 0,250 kg Bentazon oder 8 g/ha Tritosulfuron sowie 0,125 kg a.S./ha erfindungsgemäßes Alkoxylat bzw. 0,250 kg /ha Vergleichsadjuvans Atplus 411F (Mineralöl/Tensid-Gemisch; Uniqema). Die herbizide Wirkung wurde im Gewächshausversuch beurteilt. Als Testpflanze diente weißer Gänsefuß (Chenepodium album; CHEAL) und die Purpurtrichterwinde (Pharbitis album; PHAAL).

Die Pflanzen wurden direkt gesät oder pikiert mit 3-15 Pflanzen pro Topf. Die Höhe der Pflanzen bei der Wirkstoffapplikation betrug 5-16 cm. Als Versuchsgefäße dienten Plastiktöpfe mit lehmigem Sand und etwa 3 % Humus als Substrat. Die Applikation der Tenside erfolgte im Tankmixverfahren durch Spritzapplikation im Nachauflaufverfahren in einer automatischen Spritzkabine mit einer Wasseraufwandmenge von 400 Liter pro Hektar. Die Versuchsdauer betrug 6 Tage bis 4 Wochen. Die Bewertung erfolgte nach einer Skala von 0 % bis 100 %. Dabei bedeutet 0 % keine Schädigung, 100 % eine vollständige Schädigung.

In den folgenden Tabellen 1 und 2 sind die Bewertungsergebnisse zusammengestellt.

**Tabelle 1**

| Adjuvans | Bentazon (kg/ha) | Adjuvans (kg/ha) | CHEAL |
|---|---|---|---|
| - | 0,250 | - | 23 % |
| a | 0,250 | 0,125 | 92 % |
| Vergleich | 0,250 | 0,250 | 50 % |

**Tabelle 2**

| Adjuvans | Tritosulfuron (kg/ha) | Adjuvans (kg/ha) | CHEAL | PHAAL |
|---|---|---|---|---|
| - | 0,250 | - | 35 % | 48 % |
| a | 0,250 | 0,125 | 90 % | 65 % |
| Vergleich | 0,250 | 0,250 | 90 % | 62 % |

Es ist klar ersichtlich, dass Formulierungen mit erfindungsgemäßem Alkoxylat wesentlich wirksamer sind als die Vergleichsformulierung ohne Adjuvans, bzw. als die Vergleichsformulierung, die lediglich Atplus 411 F, anstatt erfindungsgemäßer Alkoxylate enthalten.

## Patentansprüche

1. Mittel, umfassend
(a) wenigstens einen Wirkstoff zur Pflanzenbehandlung; und
(b) wenigstens ein alkoxyliertes 2-Propylheptanol der Formel (I)
R-O-(CₘH₂ₘO)ₓ-(CₙH₂ₙO)_{y}-(CₚH₂ₚO)_{z}-H (I)
worin
R für 2-Propylheptyl steht;
m, n, p unabhängig voneinander für 2 oder 3 stehen;
x+y+z einem Wert von 1 bis 100 entsprechen.

2. Mittel nach Anspruch 1, **dadurch gekennzeichnet, dass** m = 2 ist, der Wert von x größer als Null und z Null ist.

3. Mittel nach Anspruch 2, **dadurch gekennzeichnet, dass** y Null ist.

4. Mittel nach Anspruch 2, **dadurch gekennzeichnet, dass** y Null ist und x einem Wert von 3 bis 10 entspricht.

5. Mittel nach Anspruch 2, **dadurch gekennzeichnet, dass** n = 3 ist und der Wert von y größer als Null ist.

6. Mittel nach Anspruch 5, **dadurch gekennzeichnet, dass** das Verhältnis von x zu y 1:1 bis 4:1 beträgt.

7. Mittel nach Anspruch 5, **dadurch gekennzeichnet, dass** das Verhältnis von x zu y 1.5:1 bis 3:1 beträgt.

8. Mittel nach Anspruch 5, 6 oder 7, **dadurch gekennzeichnet, dass** x einem Wert von 4 bis 10 entspricht.

9. Mittel nach Anspruch 5, 6. 7 oder 8, **dadurch gekennzeichnet, dass** y einem Wert von 2 bis 5 entspricht.

10. Mittel nach Anspruch 5, 6, 7, 8 oder 9, **dadurch gekennzeichnet, dass** die Summe aus x und y einem Wert von 6 bis 15 entspricht.

11. Mittel nach Anspruch 5, **dadurch gekennzeichnet, dass** x einem Wert von 4 bis 10 entspricht, y einem Wert von 2 bis 5 entspricht, das Verhältnis von x zu y 1,5:1 bis 3:1 beträgt, und die Summe aus x und y einem Wert von 6 bis 15 entspricht.

12. Mittel nach Anspruch 1, **dadurch gekennzeichnet, dass** m = 2 ist, n = 3 ist, p = 2 ist, der Wert von x größer als Null ist, der Wert von y größer als Null ist und der Wert von z größer als Null ist.

13. Mittel nach Anspruch 1, **dadurch gekennzeichnet, dass** m = 3 ist, n = 2 ist, der Wert von x größer als Null ist, der Wert von y größer als Null ist und z Null ist.

14. Mittel nach Anspruch 13, **dadurch gekennzeichnet, dass** das Verhältnis von x zu y 1:10 bis 3:1 1 beträgt.

15. Mittel nach Anspruch 13, **dadurch gekennzeichnet, dass** das Verhältnis von x zu y 1,5:1 bis 1:6 beträgt.

16. Mittel nach Anspruch 13, 14 oder 15, **dadurch gekennzeichnet, dass** x einem Wert von 1 bis 4 entspricht.

17. Mittel nach Anspruch 13, 14, 15 oder 16, **dadurch gekennzeichnet, dass** y einem Wert von 4 bis 10 entspricht.

18. Mittel nach Anspruch 13, 14, 15, 16 oder 17, **dadurch gekennzeichnet, dass** die Summe aus x und y einem Wert von 5 bis 14 entspricht.

19. Mittel nach Anspruch 13, **dadurch gekennzeichnet, dass** x einem Wert von 1 bis 4 entspricht, y einem Wert von 4 bis 10 entspricht, das Verhältnis von x zu y 1,5:1 bis 1:6 beträgt, und die Summe aus x und y einem Wert von 5 bis 14 entspricht.

20. Mittel nach einem der Ansprüche 1 bis 19, **dadurch gekennzeichnet, dass** der Anteil der Komponente (b) am Gesamtgewicht des Mittels mehr als 5 Gew.-% beträgt.

21. Mittel nach einem der Ansprüche 1 bis 19, **dadurch gekennzeichnet, dass** der Anteil der Komponente (b) am Gesamtgewicht des Mittels mehr als 10 Gew.-% beträgt.

22. Mittel nach einem der Ansprüche 1 bis 21, **dadurch gekennzeichnet, dass** der Wirkstoff ausgewählt ist unter Bentazon, Difenzoquat, Pendimethalin, Quinclorac, Cycloxydim, Quinmerac, Sethoxydim, Cinidon-ethyl, Mecoprop, Mecoprop-P, Dichlorprop, Chloridazon, Dicamba, Metobromuron, Profoxydim, Tritosulfuron, Diflufenzopyr, s-Dimethenamid, Cyanazine, Picolinafen, Cyclosulfamuron, Imazamethabenz-methyl, Imazaquin, Acifluorfen, Nicosulfuron, Sulfur, Dithianon, Tridemorph, Metiram, Nitrothal-Isopropyl, Thiophhanate-Methyl, Metholachlor, Triforine, Cerbendazim, Vinclozolin, Dodine, Fenpropimorph, Epoxiconazole, Kresoxim-methyl, Pyraclostrobin, Dimoxystrobin, Cyazofamid, Fenoxalin, Dimethomorph, Metconazole, Dimethoate, Chlorfenvinphos, Phorate, Fenbutatin oxide, Chrorfenapyr, Simazine, Bensulforon, Flufenoxuron, Terflubenzuron, Alphacypermetrin, Cypermethrin, Hydramehylnon, Terbufos, Temephos, Halofenozide, Flocoumafen, Triazamate, Flucythrinate, Hexythiazox, Dazomet, Chlorocholinchlorid, Mepiquatchlorid und Prohexadion-Ca.

23. Verwendung eines alkoxylierten 2-Propylheptanols der Formel (I)
R-O-(CₘH₂ₘO)ₓ-(CₙH₂ₙO)_{y}-(CₚH₂ₚO)_{z}-H (I)
worin
R für 2-Propylheptyl steht;
m, n, p unabhängig voneinander für eine ganze Zahl von 2 bis 16 stehen;
x+y+z einem Wert von 1 bis 100 entsprechen,
als Adjuvans bei der Behandlung von Pflanzen.

24. Verwendung nach Anspruch 23, wobei das alkoxylierte 2-Propylheptanol wie in einem der Ansprüche 1 bis 19 definiert ist.

25. Verwendung nach Anspruch 23 oder 24, zur Verbesserung der Wirksamkeit eines Pflanzenschutzwirkstoffs.

26. Verwendung nach Anspruch 25, wobei die Wirksamkeit des Wirkstoffs durch eine stärkere Aufnahme des Wirkstoffs durch die Pflanze verbessert wird.

27. Verwendung nach Anspruch 26, wobei die Aufnahme des Wirkstoffs über das Blatt erfolgt.

28. Verwendung nach einem der Ansprüche 23 bis 27 im Pflanzenanbau, in der Landwirtschaft oder im Gartenbau.

29. Verwendung nach einem der Ansprüche 23 bis 28 im Nachauflaufverfahren.

30. Verwendung nach einem der Ansprüche 23 bis 29 bei der Sprühbehandlung von Pflanzen.

31. Verwendung nach Anspruch 30 als Tankzusatz.

## Claims

1. A composition comprising
(a) at least one active ingredient for the treatment of plants; and
(b) at least one alkoxylated 2-propylheptanol of the formula (I)
R-O-(CₘH₂ₘO)ₓ-(CₙH₂ₙO)_{y}-(CₚH₂ₚO)_{z}-H (I)
in which
R is 2-propylheptyl;
m, n and p independently of one another represent 2 or 3;
x + y + z have a value of 1 to 100.

2. The composition according to claim 1, wherein m = 2, the value of x is greater than zero and z is zero.

3. The composition according to claim 2, wherein y is zero.

4. The composition according to claim 2, wherein y is zero and x has a value of 3 to 10.

5. The composition according to claim 2, wherein n = 3 and the value of y is greater than zero.

6. The composition according to claim 5, wherein the ratio of x to y is 1:1 to 4:1.

7. The composition according to claim 5, wherein the ratio of x to y is 1.5:1 to 3:1.

8. The composition according to claim 5, 6 or 7, wherein x has a value of 4 to 10.

9. The composition according to claim 5, 6, 7 or 8, wherein y has a value of 2 to 5.

10. The composition according to claim 5, 6, 7, 8 or 9, wherein the total of x and y has a value of 6 to 15.

11. The composition according to claim 5, wherein x has a value of 4 to 10, y has a value of 2 to 5, the ratio of x to y is 1.5:1 to 3:1 and the total of x and y has a value of 6 to 15.

12. The composition according to claim 1, wherein m = 2, n = 3, p = 2, the value of x is greater than zero, the value of y is greater than zero and the value of z is greater than zero.

13. The composition according to claim 1, wherein m = 3, n = 2, the value of x is greater than zero, the value of y is greater than zero and z is zero.

14. The composition according to claim 13, wherein the ratio of x to y is 1:10 to 3:1.

15. The composition according to claim 13, wherein the ratio of x to y is 1.5:1 to 1:6.

16. The composition according to claim 13, 14 or 15, wherein x has a value of 1 to 4.

17. The composition according to claim 13, 14, 15 or 16, wherein y has a value of 4 to 10.

18. The composition according to claim 13, 14, 15, 16 or 17, wherein the total of x and y has a value of 5 to 14.

19. The composition according to claim 13, wherein x has a value to 1 to 4, y has a value of 4 to 10, the ratio of x to y is 1.5:1 to 1:6 and the total of x and y has a value of 5 to 14.

20. The composition according to any of claims 1 to 19, wherein the proportion of component (b) amounts to more than 5% by weight of the total weight of the composition.

21. The composition according to any of claims 1 to 19, wherein the proportion of component (b) amounts to more than 10% by weight of the total weight of the composition.

22. The composition according to any of claims 1 to 21, wherein the active ingredient is selected among bentazone, difenzoquat, pendimethalin, quinchlorac, cycloxydim, quinmerac, sethoxydim, cinidon-ethyl, mecoprop, mecoprop-P, dichlorprop, choridazon, dicamba, metobromuron, profoxydim, tritosulfuron, diflufenzopyr, s-dimethenamid, cyanazine, picolinafen, cyclosulfamuron, imazamethabenz-methyl, imazaquin, acifluorfen, nicosulfuron, sulfur, dithianon, tridemorph, metiram, nitrothal-isopropyl, thiophanate-methyl metholachlor, triforine, cerbendazim, vinclozolin, dodine, fenpropimorph, epoxiconazole, kresoxim-methyl, pyraclostrobin, dimoxystrobin, cyazofamid, fenoxalin, dimethomorph, metconazole, dimethoate, chlorfenvinphos, phorate, fenbutatin oxide, chlorfenapyr, simazine, bensulforon, flufenoxuron, terflubenzuron, alphacypermetrin, cypermethrin, hydramethylnon, terbufos, temephos, halofenozide, flocoumafen, triazamate, flucythrinate, hexythiazox, dazomet, chlorocholine chloride, mepiquat chloride and prohexadione-Ca.

23. The use of an alkoxylated 2-propylheptanol of the formula (I)
R-O-(CₘH₂ₘO)ₓ-(CₙH₂ₙO)_{y}-(CₚH₂ₚO)_{z}-H (I)
in which
R is 2-propylheptyl;
m, n and p independently of one another represent an integer from 2 to 16;
x + y + z have a value of 1 to 100,
as adjuvant in the treatment of plants.

24. The use according to claim 23, wherein the alkoxylated 2-propylheptanol is as defined in any of claims 1 to 19.

25. The use according to claim 23 or 24 for improving the efficacy of a plant protectant.

26. The use according to claim 25, wherein the efficacy of the active ingredient is improved as the result of a greater uptake of the active ingredient by the plant.

27. The use according to claim 26, wherein the active ingredient is taken up via the leaf.

28. The use according to any of claims 23 to 27 in plant cultivation, in agriculture or in horticulture.

29. The use according to any of claims 23 to 28 in the post-emergence method.

30. The use according to any of claims 23 to 29 in the spray treatment of plants.

31. The use according to claim 30 as tank additive.

## Revendications

1. Agent, comprenant
(a) au moins une substance active pour le traitement de plantes ; et
(b) au moins un 2-propylheptanol alcoxylé de formule (I)
R-O-(CₘH₂ₘO)ₓ-(CₙH₂ₙO)_{y}-(CₚH₂ₚO)_{z}-H (I)
où
R représente 2-propylheptyle ;
m, n, p valent, indépendamment l'un de l'autre, 2 ou 3 ;
x + y + z correspond à une valeur de 1 à 100.

2. Agent selon la revendication 1, **caractérisé en ce que** m = 2, la valeur de x est supérieure à zéro et z vaut zéro.

3. Agent selon la revendication 2, **caractérisé en ce que** y vaut zéro.

4. Agent selon la revendication 2, **caractérisé en ce que** y vaut zéro et x correspond à une valeur de 3 à 10.

5. Agent selon la revendication 2, **caractérisé en ce que** n = 3 et la valeur de y est supérieure à zéro.

6. Agent selon la revendication 5, **caractérisé en ce que** le rapport de x à y vaut 1:1 à 4:1.

7. Agent selon la revendication 5, **caractérisé en ce que** le rapport de x à y vaut 1,5:1 à 3:1.

8. Agent selon la revendication 5, 6 ou 7, **caractérisé en ce que** x correspond à une valeur de 4 à 10.

9. Agent selon la revendication 5, 6, 7 ou 8, **caractérisé en ce que** y correspond à une valeur de 2 à 5.

10. Agent selon la revendication 5, 6, 7, 8 ou 9, **caractérisé en ce que** la somme de x et y correspond à une valeur de 6 à 15.

11. Agent selon la revendication 5, **caractérisé en ce que** x correspond à une valeur de 4 à 10, y correspond à une valeur de 2 à 5, le rapport de x à y vaut 1,5:1 à 3:1, et la somme de x et y correspond à une valeur de 6 à 15.

12. Agent selon la revendication 1, **caractérisé en ce que** m = 2, n = 3, p = 2, la valeur de x est supérieure à zéro, la valeur de y est supérieure à zéro et la valeur de z est supérieure à zéro.

13. Agent selon la revendication 1, **caractérisé en ce que** m = 3, n = 2, la valeur de x est supérieure à zéro, la valeur de y est supérieure à zéro et z vaut zéro.

14. Agent selon la revendication 13, **caractérisé en ce que** le rapport de x à y vaut 1:10 à 3:1.

15. Agent selon la revendication 13, **caractérisé en ce que** le rapport de x à y vaut 1,5:1 à 1:6.

16. Agent selon la revendication 13, 14 ou 15, **caractérisé en ce que** x correspond à une valeur de 1 à 4.

17. Agent selon la revendication 13, 14, 15 ou 16, **caractérisé en ce que** y correspond à une valeur de 4 à 10.

18. Agent selon la revendication 13, 14, 15, 16 ou 17, **caractérisé en ce que** la somme de x et y correspond à une valeur de 5 à 14.

19. Agent selon la revendication 13, **caractérisé en ce que** x correspond à une valeur de 1 à 4, y correspond à une valeur de 4 à 10, le rapport de x à y vaut 1,5:1 à 1:6, et la somme de x et y correspond à une valeur de 5 à 14.

20. Agent selon l'une quelconque des revendications 1 à 19, **caractérisé en ce que** la proportion du composant (b) par rapport au poids total de l'agent est supérieure à 5% en poids.

21. Agent selon l'une quelconque des revendications 1 à 19, **caractérisé en ce que** la proportion du composant (b) par rapport au poids total de l'agent est supérieure à 10% en poids.

22. Agent selon l'une quelconque des revendications 1 à 21, **caractérisé en ce que** la substance active est choisie parmi Bentazone, Difenzoquat, Pendiméthaline, Quinclorac, Cycloxydime, Quinmerac, Séthoxydime, Cinidon-éthyle, Mecoprop, Mecoprop-P, Dichlorprop, Chloridazone, Dicamba, Metobromuron, Profoxydim, Tritosulfuron, Diflufenzopyr, s-Diméthénamide, Cyanazine, Picolinafen, Cyclosulfamuron, Imazaméthabenzméthyle, Imazaquine, Acifluorfen, Nicosulfuron, Soufre, Dithianon, Tridemorph, Metirame, Nitrothal-Isopropyl, Thiophanate-Méthyl, Metholachlor, Triforine, Cerbendazim, Vinclozoline, Dodine, Fenpropimorph, Epoxiconazole, Kresoxim-méthyl, Pyraclostrobine, Dimoxystrobine, Cyazofamid, Fenoxaline, Diméthomorphe, Metconazole, Diméthoate, Chlorfenvinphos, Phorate, Fenbutatin oxyde, Chrorfenapyr, Simazine, Bensulforon, Flufénoxuron, Terflubenzuron, Alpha-cypermétrine, Cyperméthrine, Hydraméthylnon, Terbufos, Téméphos, Halofenozide, Flocoumafen, Triazamate, Flucythrinate, Hexythiazox, Dazomet, Chlorure de chlorocholine, Chlorure de Mépiquat et Prohexadione-Ca.

23. Utilisation d'au moins un 2-propylheptanol alcoxylé de formule (I)
R-O-(CₘH₂ₘO)ₓ-(CₙH₂ₙO)_{y}-(CₚH₂ₚO)_{z}-H (I)
où
R représente 2-propylheptyle ;
m, n, p représentent, indépendamment l'un de l'autre, un nombre entier de 2 à 16 ;
x + y + z correspond à une valeur de 1 à 100, comme adjuvant lors du traitement de plantes.

24. Utilisation selon la revendication 23, où le 2-propylheptanol alcoxylé est défini comme dans l'une quelconque des revendications 1 à 19.

25. Utilisation selon la revendication 23 ou 24, pour améliorer l'activité d'une substance active de protection des plantes.

26. Utilisation selon la revendication 25, où l'activité de la substance est améliorée par une absorption plus forte de la substance active par la plante.

27. Utilisation selon la revendication 26, où l'absorption de la substance active est réalisée via la feuille.

28. Utilisation selon l'une quelconque des revendications 23 à 27 dans la culture de plantes, l'agriculture ou l'horticulture.

29. Utilisation selon l'une quelconque des revendications 23 à 28 dans le procédé de post-émergence.

30. Utilisation selon l'une quelconque des revendications 23 à 29 lors du traitement par pulvérisation de plantes.

31. Utilisation selon la revendication 30 comme additif dans une citerne.
